# EUROPEAN PATENT SPECIFICATION

(11) **EP 0 666 777 B1**
(45) Date of publication and mention of the grant of the patent: **04.06.1997**
(21) Application number: 92924964.7
(22) Date of filing: 04.11.1992
(51) Int. Cl.: B01J 47/00, B09B 3/00, G21F 9/28, G21F 9/34

(54) **METHOD AND DEVICE FOR TREATMENT AND DISPOSAL OF SPENT ION-EXCHANGE RESIN**
METHODE UND VORRICHTUNG ZUR BEHANDLUNG UND ENTSORGUNG VON VERBRAUCHTEN IONENAUSTAUSCHERHARZ
PROCEDE ET DISPOSITIF DE TRAITEMENT ET D'ELIMINATION DE RESINE ECHANGEUSE D'IONS USEE

(43) Date of publication of application: 16.08.1995
(73) Proprietor: ABB ATOM AB, S-721 83 Västeras (SE)
(72) Inventor: SALOMON, Heinz, S-724 78 Västeras (SE); TORSTENFELT, Börje, S-724 71 Västeras (SE)
(74) Representative: Boecker, Joachim, Dr.-Ing.
(86) International application number: SE9200761
(87) International publication number: WO9409904

(56) References cited:
- EP-A- 0 143 234
- EP-A- 0 149 783

## Description

### TECHNICAL FIELD

The invention relates to a method for treating and disposing of spent ion-exchange resin, whereby the risk of swelling of the solidified resin is reduced and therefore a high resin content is achieved in the solidified waste matrix. The invention is especially applicable to treating radioactive spent ion-exchange resin from nuclear plants. The invention also relates to a device for carrying out said method. The invention particularly collects and treats odorous off-gases that would result in hazardous or otherwise unwanted gas releases inside or outside the plant.

### BACKGROUND ART

EP-A-0 149 783 discloses a method of processing radioactive spent ion exchange resin, the spent ion exchange resin is pyrolyzed in an inert atmosphere and harmful decomposition gas such as sulfur and nitrogen compounds generated during pyrolysis is separated. Next, the spent ion exchange resin is pyrolyzed in oxidizing atmosphere and harmless gases such as carbone oxide and water vapor gases are separated. It is preferred that a transition metal as a catalyst be absorbed through ion exchange into spent cation exchange resin, and an anionic atom group containing a transition metal as a catalyst be absorbed through ion exchange into spent anion exchange, before both of the pyrolysis steps. The pyrolysis is carried out at two atmosphere stages, and the harmful and harmless gases are decomposed separately. The pyrolysis in both of pyrolysis steps is effected at a temperature in the range of from 240 to 420°C. The proportions of the sulfur and nitrogen compounds in spent ion exchange resin after pyrolysis, and also the processing volume of the spent ion exchange resin can be reduced.

Waste in the form of spent powdered or bead ion-exchange resins, filter residues or sludges is normally treated and solidified together with a solidifying agent before disposal. As solidification agents cement, bitumen or organic polymers are normally used.

Prior to solidifying spent ion-exchange resin, it is subjected to a heat-treatment during which the functional groups of the anionic part of said resin is decomposed, resulting in an end product with less tendency to swell when wetted, whereby the risk of swelling of the solidified resin is reduced and therefore a high resin content is achieved in the solidified waste matrix, e.g. ≥ 300 kg dry resin per cement solidified waste matrix. The decomposed functional groups, methanol and amines are released as gases, but will when cooled and transferred to an aqueous phase be absorbed in the water. The amines are in an acidic or neutral aqueous phase present as ions and soluble in the water, but will in an alkaline environment be transferred to a strongly odorous volatile gas. In solidification processes involving an increase in pH of the mixture (e.g. using cement), a solidification of the mixture will result in an undesired release of any volatile organic compounds contained in the mixture. To avoid this it is possible to oxidize the organic compounds released during the heat-treatment before further use or discharge, for example using a standard wet oxidation process. However, a wet oxidation process is expensive due to the the need of chemical reagents, the process is difficult to bring to 100% organic destruction and it results in large amounts of aqueous residues that may need to be further treated.

One aim of the invention is to provide a method for treatment of spent ion-exchange resin in such way that not only the treated resin but also the fumes or vapours liberated from the resin during treatment are treated and disposed of in an environmentally sound way.

Another aim of the invention is to provide a plant for carrying out said method for treatment of spent ion-exchange resin.

### SUMMARY OF THE INVENTION

The invention relates to a method for treatment and disposal of a spent ion-exchange resin, whereby said resin first is suspended in water, essentially for transportation, and thereafter de-watered, dried, heat treated and mixed with water and liquid additives, the resulting mixture is disposed into a container (19) where a binder and solid additives are added and mixed, whereafter said mixture of binder, dried and heat-treated resin and water is left to solidify into a body in which the resin is contained as a filler,
**characterized in that** the resin is dried and heat-treated at a temperature of 130°C to 170 °C to decompose functional groups of the anionic part of said resin ,
that vapours, which are given off from the resin during treatment, especially vapours given off during said drying and heat-treatment, are collected in a circuit (17),
preferably an ejector circuit,
that said vapours, comprising at least water vapour and volatile organic compounds such as amines, are condensed into a condensate, whereby substantially all of said volatile organic compounds are maintained solved in said condensate,
that said volatile organic compounds, contained solved in the condensate, are separated from the condensate, resulting in a condensate substantially free from said volatile organic compounds and a vapour containing said volatile organic compounds, and
that said volatile organic compounds are destructed, whereby they are substantially transformed into CO₂, H₂0 and N₂, before being released, as disclosed in claim 1 and a plant for carrying out the cited method as disclosed in independent claim 8.

In one embodiment of the invention the spent ion-exchange resin is suspended into a pumpable slurry by addition of water to a slurry tank into which the resin is fed. The slurry is pumped to a de-watering unit, preferably in the form of a centrifuge. After de-watering the resin is fed into a dryer, where said resin is dried and heat-treated at approximately 150 °C ± 20 °C under continuous stirring of the resin. Vapours, which are given off from the resin during drying and heat-treatment, are removed from the dryer by a water-driven ejector pump and collected in an ejector-circuit, where the vapours are cooled and condensed by the water circulating within the circuit. Additional cooling is provided by a cooler arranged within the circuit. Said vapour and consequently the condensate obtained comprise volatile organic compounds such as amines which are separated from the condensate through a treatment which preferably is administered in a treatment tank arranged adjacent to the ejector circuit. After separation from the condensate said volatile organic compounds are subjected to a destruction treatment which substantially transforms them into CO₂,H₂O and N₂.

After said volatile organic compounds have been separated from the condensate, said condensate, together with cement property enhancing liquid additives, and if needed extra water, is added to the resin in a mixer. The resulting mixture is filled into a container, e.g. a 200L drum, said container is transferred to a solid additive mixing station where a solidification agent, preferably a hydraulic binder such as a cement, and if needed cement property enhancing solid additives are mixed with the resin-slurry. The resulting mixture of resin, binder and condensate is left in the container and allowed to solidify.

According to one further embodiment of the invention, said volatile organic compounds, after separation from the condensate, are collected as vapours in a gas circuit. The gas circuit is arranged adjacent to the treatment tank and comprising at least means for destruction of said volatile organic compounds through combustion and/or catalytic oxidation. Preferably said gas circuit comprises a combustion unit, a moisture separator and, if needed, a flame arrester upstream of the combustion unit and a cooler downstream of the combustion unit. The combustion unit can be a conventional combustion chamber where glowing bodies, such as electrical heating element, spark igniters, burners or any other means are arranged for ignition and combustion of said volatile organic compounds to insignificant amounts (amine reduction >99%). To avoid leakage of uncombusted organic compounds, an absorbent filter or other form of unit containing absorbent media for removal of any organic residues from vapours can be arranged downstream of the combustion unit. Fluidised beds or sand beds can be arranged as combustion units, especially when the used bed material can be expected to interact with the volatile organic compounds or the combustion products to reduce the amount of undesired compounds in the flues. Also beds containing a catalyst can be arranged as combustion units, thus reducing the combustion temperature from approximately >800 °C to about 200 to 500 °C. Utilised bed material can be expected to interact with the volatile organic compounds or the combustion products in a way that significantly (amine reduction >99%) will reduce the amount of undesired compounds in the flues.

According to one preferred embodiment of the invention, said separation treatment includes a transformation of said volatile organic compounds from ionic form in the condensate to gaseous form which causes the volatile organic compounds to evaporate from the condensate. Preferably this formation of gaseous compounds is achieved by addition of an alkaline agent to said condensate in the treatment tank. This addition raises the pH of the condensate whereby the ionic form of said organic compounds in the condensate is reduced and the gaseous compounds are formed, so that they evaporate from the condensate. By this procedure an uncontrolled emission and exposure to odorous gaseous organic compounds and waste water needing extra treatment are eliminated.

In case spent bead resin should be treated, it is in many instances advantageous to transform the resin to powdered ion-exchange resin before starting the treatment and thus improve the conditions during treatment and simultaneously reduce the bulk-volume of the resin. Preferably said bead resin is milled in a ball, pebble or rod mill before being added to the slurry tank for suspension and further treatment in the treatment plant.

### BRIEF DESCRIPTION OF THE DRAWING

The appended drawing shows a schematic representation of a plant for carrying out a preferred embodiment of the invention.

### DESCRIPTION OF THE PREFERRED EMBODIMENTS

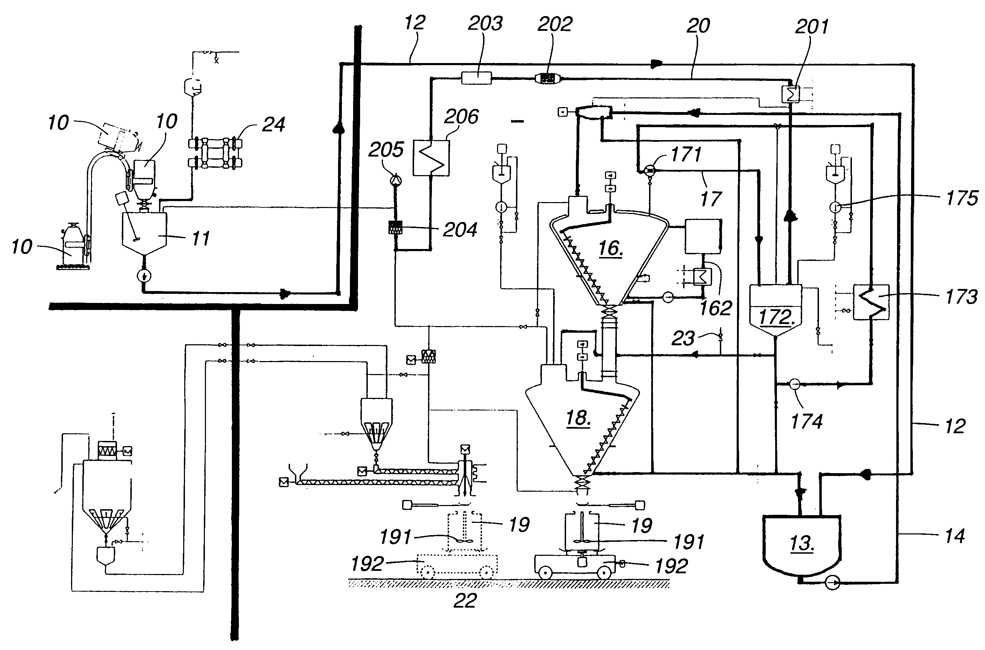

A plant for treatment and disposal of a spent powdered ion-exchange resin is schematically illustrated in figure 1.

Spent powdered ion-exchange resin from intermediate storage drums 10 is emptied into a slurry tank 11 where it is suspended into a pumpable slurry. Said slurry is, through a slurry line 12, fed into a second slurry tank 13. To slurry tank 13 also spent ion-exchange resin directly from operation of the power plant is pumped. Said slurry from slurry tank 13 is fed into the actual treatment plant through a second slurry line 14, either directly to dryer 16 or through mechanical de-watering in a centrifuge 15, preferably a so-called decanter centrifuge. Vapours given off from the resin and/or the slurry during dewatering are collected and fed into a gas circuit 20, while back-water from the decanter 15 is returned to the second slurry tank.

After de-watering the resin is fed into a dryer 16, in the figure illustrated as a conical orbiting screw mixer with a heating jacket 161, heated by a circulating heat transfer fluid that is circulating in said heating jacket 161 and a connected heat transfer circuit 162. During heat-treatment the dryer is kept at a constant pressure slightly below ambient pressure to ensure a substantially complete removal of volatile organic compounds from the resin. An underpressure in the dryer 16 is achieved by applying a suction from a pump 171, in the form of a water-driven ejector, connected to an ejector circuit 17. Vapours given off during heat-treatment, which at least comprise water-vapour and volatile organic compounds, are collected and condensed in said ejector circuit 17 which apart from the water-driven ejector 171 also comprises at least a treatment tank 172, a cooler 173 and a pump 174. The condensate is dissolved in and cooled by the water circulating in said ejector circuit 17. Further cooling of said circulating water is provided by the cooler 173.

To separate the volatile organic compounds from the condensate, an alkaline agent is added to the treatment tank 172 by addition means 175. The addition of an alkaline agent raises the pH of the condensate whereby said volatile organic compounds in the condensate are transformed from ionic to gaseous form so that said volatile organic compounds are driven off from the condensate. Substantially all volatile organic compounds are removed through a gas circuit 20 arranged adjacent to the treatment tank 172. Said vaporised organic compounds which at least comprise amines are subjected to a destruction treatment, whereby they are transformed to CO₂, H₂O and N₂. Said gas circuit 20, which in the embodiment shown in the figure collects vapours from the decanter 15 and from the treatment tank 172, comprises a moisture separator/heat exchanger 201, a combustion unit 203 and absorbent unit 204, and could if needed contain a flame arrester 202. The necessary underpressure to prevent leakage to the surroundings is achieved by a fan or blower 205. Oxygen, preferably as air, is added to tank 172 to ensure the removal of the volatile organic compounds from the ejector circuit and to ensure a sufficient but not excessive amount of oxygen for the combustion in combustion unit 203.

The combustion unit 203 can be a conventional combustion chamber where glowing bodies, such as electrical heating elements, spark igniters, burners or any other convenient means are arranged for ignition and combustion of said volatile organic compounds, whereby they are transformed into CO₂, H₂O and N₂. To avoid leakage of uncombusted organic compounds, an absorbent unit 204 containing an absorbent filter or a bed of absorbent media is arranged for removal of any organic residues from vapours downstream of the combustion unit. Fluidised beds or sand beds arranged as combustion units 203, especially when used bed material can be expected to interact with the volatile organic compounds or the combustion products to reduce the amount of undesired compounds in the flues, are an optional form of a combustion unit 203.

In other embodiments of the invention said combustion unit 203 is replaced or supplemented by a unit for catalytic oxidation of volatile organic compounds whereby they are transformed into CO₂, H₂O and N₂.

The heat-treated, dried resin is fed from the dryer 16 into a mixer 18, in the figure illustrated with a conical orbiting screw mixer. To the mixer 18 also water is added. Preferably, the condensate freed from volatile organic compounds is taken from the treatment tank 172 and added to the resin in the mixer 18. Wet additives required for the mixing and/or solidification are prepared in one or more special additives circuits 21 and added to the mixer 18. Cement or any other suitable solidifying agent is added to the resin and water mixture at a separate solid additives station 22 after said mixture of resin and water has been fed into a container 19. Said container 19 is preferably fitted with a built in stirrer 191 and loaded on a transport wagon 192.

In case spent bead resin should be treated, it is in many instances advantageous to transform the resin to powdered ion-exchange resin before starting the treatment and thus improve the conditions during treatment and simultaneously reduce the bulk-volume of the resin. Preferably said bead resin is added to a mill 24, in the form of a ball, pebble or rod mil, before being added to the slurry tank 11,13 for suspension and further treatment in the treatment plant.

Other forms of waste material suitable for the same type of treatment before disposal can also be treated in a plant according to the invention. Waste material free from volatile compounds likely to evaporate in connection with the solidification can be added directly to the mixer 18. The plant as shown in the figure also comprises connection means 23 for feeding of sludges of such material, for instance evaporator bottoms, into the mixer 18.

## Claims

1. Method for treatment and disposal of a spent powdered ion-exchange resin, whereby said resin first is suspended in water, essentially for transportation, and thereafter de-watered, dried, heat treated and mixed with water and liquid additives, the resulting mixture is disposed into a container (19) where a binder and solid additives are added and mixed, whereafter said mixture of binder, dried and heat-treated resin and water is left to solidify into a body in which the resin is contained as a filler,
**characterized in that** the resin is dried and heat-treated at a temperature of 130°C to 170 °C to decompose functional groups of the anionic part of said resin ,
that vapours, which are given off from the resin during treatment, especially vapours given off during said drying and heat-treatment, are collected in a circuit (17),
preferably an ejector circuit,
that said vapours, comprising at least water vapour and volatile organic compounds such as amines, are condensed into a condensate, whereby substantially all of said volatile organic compounds are maintained solved in said condensate,
that said volatile organic compounds, contained solved in the condensate, are separated from the condensate, resulting in a condensate substantially free from said volatile organic compounds and a vapour containing said volatile organic compounds, and
that said volatile organic compounds are destructed, whereby they are substantially transformed into CO₂, H₂0 and N₂, before being released.

2. Method according to claim 1, **characterized in that** the condensate which has been freed from substantially all volatile organic compounds is added to the resin and the mixture is filled into a container (19) and together with the solidifying agent, a binder, preferably a hydraulic binder such as a cement, said mixture of resin, solidifying agent and condensate are allowed to solidify.

3. Method according to claim 1 or claim 2, **characterized in that** said volatile organic compounds, contained in the vapours separated from the condensate, are oxidized through combustion and/or catalytic oxidation.

4. Method according to claim 3, **characterized in that** said oxidized vapours are passed through an absorbent filter (204) or other absorbent media for removal of any organic residues contained in said vapours before said vapours are released.

5. Method according to any of the preceding claims, **characterized in that** the solubility of said volatile organic compounds in the condensate is lowered to separate said volatile organic compounds from the condensate.

6. Method according to claim 5, **characterized in that** an alkaline agent is added to said condensate to raise the pH of the condensate and reduce the solubility of said organic compounds in the condensate, whereby said volatile organic compounds are separated from said condensate.

7. Method according to any of the preceding claims, **characterized in that** said resin if in bead form is, as a pretreatment, crushed, preferably milled, to reduce the particle size of the resin and thus improve the conditions for heat-treatment and simultaneously increase the amount of resin that can be added in the solidification matrix without jeopardizing the final product properties.

8. Plant for treatment and disposal of spent ion-exchange resin for carrying out the method according to any of the preceding claims, comprising
- means for suspending (11,13) said resin into a pumpable slurry, preferably in the form of a tank,
- means for de-watering (15) said resin, preferably in the form of a centrifuge,
- means for drying (16) said resin, a drier,
- means for mixing (18) said resin with a binder and water, a mixer, and
- means for disposing (19) said mixture into a container where said mixture is left to solidify into a body in which the resin is contained as a filler, **characterized in that** said plant comprises
- means, in the form of an ejector circuit (17) comprising at least a water-driven ejector pump (171), for collecting, condensing and cooling vapours given off from said resin during treatment, especially vapours given off from said resin during drying and heat-treatment, said vapours comprising at least water vapour and volatile organic compounds such as methane and amines,
- means for separating (172) said organic compounds from the condensate, resulting in a condensate substantially free from said volatile organic compounds and a vapour containing said volatile organic compounds,
- means for destruction (202,203) of said volatile organic compounds, whereby they are substantially transformed into CO₂, H₂0 and N₂, before being released.

9. Plant according to claim 8, **characterized in that** said ejector circuit (17) comprises
- suction means (171), preferably in the form of a water-driven ejector pump, for collecting vapours given off from the resin during the treatment,
- cooling means, preferably in the form of water circulating in said ejector circuit and a cooler (173), for condensing the vapours and cooling the condensate and
- a treatment tank (172) suitable for separation of said volatile organic compounds from said condensate.

10. Plant according to claim 8 or claim 9, **characterized** by means for adding an alkaline agent (175) to said condensate, whereby the pH of said condensate is raised so that the solubility of said volatile nitrogen containing organic compounds in the condensate is reduced and said volatile organic compounds and part of the methanol are separated from said condensate.

11. Plant according to any of claim 8, claim 9 or claim 10 **characterized in that** a gas circuit (20) is arranged for treatment of said vapours separated from the condensate, said gas circuit comprising at least means for destruction of said volatile organic compounds contained in said vapours through combustion and/or catalytic oxidation (202,203).

12. Plant according to claim 11, **characterized in that** said gas circuit (20) for treatment of said vapours comprises a combustion unit (203) for destruction of said volatile organic compounds and, downstream of said combustion unit, an absorbent filter (204), for removal of any organic residues from said vapours.

13. Plant according to claim 11 and 12, **characterized in that** said gas circuit (20) for treatment of said vapours can comprise a flame arrester (202) and/or a heat exchanger (201) upstream of the combustion unit for destruction of said volatile organic compounds and, downstream of said combustion unit, a cooler (206) for heat removal before further gas release.

14. Plant according to any of claims 8 to 13, **characterized** by a pretreatment unit (24), preferably in the form of a mill, arranged for reducing the particle size of bead ion-exchange resin and thus improve the conditions for heat-treating said resin and simultaneously increase the amount of resin that can be added in the solidification matrix without jeopardizing the final product properties.

## Patentansprüche

1. Verfahren zur Behandlung und Entsorgung von verbrauchtem pulverförmigem Ionenaustauscherharz, wobei das genannte Harz zunächst in Wasser im wesentlichen zum Zwecke des Transportes in Suspension gebracht wird und danach entwässert, getrocknet, wärmebehandelt und mit Wasser und flüssigen Zusätzen gemischt wird, worauf die resultierende Mischung in einen Behälter (19) gefüllt wird, in welchem ein Bindemittel und feste Zusätze zugegeben und untergemischt werden, worauf die genannte Mischung aus Bindemittel, getrocknetem und wärmebehandeltem Harz und Wasser in Ruhe gelassen wird, um sich zu einem Körper zu verfestigen, in welchem das Harz als Füllmaterial enthalten ist,
**dadurch gekennzeichnet**,
- daß das Harz bei einer Temperatur von 130°C bis 170°C getrocknet und wärmebehandelt wird, um austauschbare Gruppen des anionischen Teils des Harzes zu zerlegen,
- daß Dämpfe, die von dem Harz während der Behandlung abgegeben werden, insbesondere Dämpfe, die während des genannten Trocknens und während der Wärmebehandlung abgegeben werden, in einem Kreis (17), vorzugsweise einem Ejektorkreis, gesammelt werden,
- daß die genannten Dämpfe, die zumindest Wasserdampf und flüchtige organische Verbindungen enthalten, wie zum Beispiel Amine, zu einem Kondensat kondensiert werden, wobei im wesentlichen alle der genannten flüchtigen organischen Verbindungen in dem genannten Kondensat gelöst bleiben,
- daß die genannten flüchtigen organischen Verbindungen, die in dem Kondensat gelöst enthalten sind, von dem Kondensat getrennt werden, wobei sich ein von flüchtigen organischen Verbindungen im wesentlichen freies Kondensat und ein die genannten flüchtigen organischen Verbindungen enthaltender Dampf bilden, und
- daß die genannten flüchtigen organischen Verbindungen zerstört werden, wobei sie im wesentlichen in CO₂, H₂O und N₂ übergeführt werden.

2. Verfahren nach Anspruch 1, **dadurch gekennzeichnet**, daß das Kondensat, welches im wesentlichen von allen flüchtigen organischen Verbindungen befreit ist, dem Harz zugegeben wird und die Mischung in einen Behälter (19) gefüllt wird und zusammen mit dem verfestigenden Mittel, einem Bindemittel, vorzugsweise einem hydraulischen Bindemittel, wie zum Beispiel einem Zement, die genannte Mischung aus Harz, verfestigendein Mittel und Kondensat sich zur Verfestigung überlassen wird.

3. Verfahren nach Anspruch 1 oder 2, **dadurch gekennzeichnet**, daß die genannten flüchtigen organischen Verbindungen, die sich in dem vom Kondensat getrennten Dampf befinden, durch Verbrennung und/oder katalytische Oxydation oxydiert werden.

4. Verfahren nach Anspruch 3, **dadurch gekennzeichnet**, daß die genannten oxydierten Dämpfe durch einen Absorberfilter (204) oder ein anderes absorbierendes Mittel geleitet werden zur Entfernung von in den genannten Dämpfen enthaltenen organischen Rückständen, bevor die Dämpfe freigesetzt werden. sich in die Umwelt entlassen werden.

5. Verfahren nach einem der vorhergehenden Ansprüche, **dadurch gekennzeichnet**, daß die Löslichkeit der genannten flüchtigen organischen Verbindungen in dem Kondensat erniedrigt wird, um die flüchtigen organischen Verbindungen von dem Kondensat zu trennen.

6. Verfahren nach Anspruch 5, **dadurch gekennzeichnet**, daß ein alkalisches Mittel dem genannten Kondensat zugegeben wird, um den pH-Wert des Kondensats zu erhöhen und die Löslichkeit der genannten organischen Verbindungen im Kondensat herabzusetzen, wobei die genannten flüchtigen organischen Verbindungen von dem Kondensat getrennt werden.

7. Verfahren nach einem der vorhergehenden Ansprüche, **dadurch gekennzeichnet**, daß das genannte Harz, wenn es in perliger Form vorliegt, durch eine Vorbehandlung zerkleinert, vorzugsweise gemahlen, wird, um die Partikelgröße des Harzes herabzusetzen und so die Bedingungen für die Wärmebehandlung zu verbessern und gleichzeitig die Menge des Harzes zu vergrößern, die der Verfestigungsmatrix ohne Gefahr für die Eigenschaften des Endproduktes zugesetzt werden kann.

8. Anlage zur Behandlung und Entsorgung von verbrauchtem Ionenaustauscherharz zur Durchführung des Verfahrens nach einem der vorhergehenden Ansprüche mit
- einer Einrichtung (11, 13), vorzugsweise in Form eines Tanks, zur Herstellung einer pumpfähigen Suspension des genannten Harzes,
- einer Einrichtung (15), vorzugsweise in Form einer Zentrifuge, zur Entwässerung des genannten Harzes,
- einer Einrichtung, einem Trockner (16), zum Trocknen des Harzes,
- einer Einrichtung, einem Mischer (18), zur Mischung des Harzes mit einem Bindemittel und Wasser, und
- einer Einrichtung (19) zur Einbringung der genannten Mischung in einen Behälter, in welchem die Mischung sich zu einen Körper verfestigen kann, in welchem das Harz als Füllmaterial enthalten ist,
**dadurch gekennzeichnet**, daß zu der genannten Anlage gehören
- eine Einrichtung in Gestalt eines Ejektorkreises (17) mit mindestens einer wassergetriebeben Ejektorpumpe (171) zum Sammeln, Kondensieren und Kühlen von Dämpfen, die während der Behandlung von dem genannten Harz abgegeben werden, insbesondere von Dämpfen, die von dem genannten Harz während des Trocknens und der Wärmebehandlung abgegeben werden, welche Dämpfe mindestens Wasserdampf und flüchtige organische Verbindungen, wie zum Beispiel Methan und Amine, enthalten,
- eine Einrichtung (172) zur Trennung der genannten organischen Verbindungen von dem Kondensat, wodurch sich ein Kondensat ergibt, welches im wesentlichen von den genannten flüchtigen organischen Verbindungen frei ist, und ein Dampf ergibt, welcher die genannten flüchtigen organischen Verbindungen enthält, und
- eine Einrichtung (202, 203) zur Zerstörung der genannten flüchtigen organischen Verbindungen, wobei diese im wesentlichen in CO₂, H₂O und N₂ übergeführt werden, bevor sie freigesetzt werden.

9. Anlage nach Anspruch 8, **dadurch gekennzeichnet**, daß zu dem genannten Ejektorkreis (17) gehören
- eine Saugeinrichtung (171), vorzugsweise in Gestalt einer wassergetriebenen Ejektorpumpe, zum Sammeln von Dämpfen, die während der Behandlung vom Harz abgegeben werden,
- eine Kühleinrichtung, vorzugsweise in Gestalt von Wasser, welches in dem genannten Ejektorkreis zirkuliert, und einem Kühler (173) zur Kondensation der Dämpfe und zur Kühlung des Kondensats und
- ein Behandlungstank (172), der zur Trennung der genannten flüchtigen organischen Verbindungen von dem genannten Kondensat geeignet ist.

10. Anlage nach Anspruch 8 oder 9, **dadurch gekennzeichnet**, daß eine Einrichtung (175) für die Zuführung eines alkalischen Mittels zu dem Kondensat vorhanden ist, wobei der pH-Wert des Kondensats derart erhöht wird, daß die Löslichkeit der genannten flüchtigen stickstoffhaltigen organischen Verbindungen in dem Kondensat herabgesetzt wird und die genannten flüchtigen organischen Verbindungen und ein Teil des Methanols von dem Kondensat getrennt werden.

11. Anlage nach einem der Ansprüche 8, 9 oder 10, **dadurch gekennzeichnet**, daß ein Gaskreis (20) vorhanden ist zur Behandlung des genannten aus dem Kondensat abgetrennten Dämpfe, wobei der Gaskreis mindestens eine Einrichtung zur Zerstörung der im Dampf enthaltenen flüchtigen organischen Verbindungen durch Verbrennung und/oder katalytische Oxydation (202, 203) enthält.

12. Anlage nach Anspruch 11, **dadurch gekennzeichnet**, daß der Gaskreis (20) zur Behandlung der genannten Dämpfe eine Verbrennungseinheit (203) zur Zerstörung der genannten flüchtigen organischen Verbindungen enthält und stromabwärts dieser Verbrennungseinheit einen Absorberfilter (204) zur Entfernung von organischen Rückständen aus dem genannten Dampf enthält.

13. Anlage nach Anspruch 11 und 12, **dadurch gekennzeichnet**, daß der genannte Gaskreis (20) zur Behandlung der genannten Dämpfe eine Flammensperre (202) und/oder einen Wärmeaustauscher (201) stromaufwärts der Verbrennungseinheit zur Zerstörung der genannten flüchtigen organischen Verbindungen enthalten kann und stromabwärts der genannten Verbrennungseinheit einen Kühler (206) zum Entzug von Wärme vor Freisetzung der Gase.

14. Anlage nach einem der Ansprüche 8 bis 13, **dadurch gekennzeichnet**, daß eine Vorbehandlungseinheit (24), vorzugsweise in Form einer Mühle, vorhanden ist zur Verkleinerung der Partikelgröße von perlförmigem Ionenaustauscherharz und somit zur Verbesserung der Bedingungen für die Wärmebehandlung des genannten Harzes und gleichzeitig zur Vergrößerung der Harzmenge, die der Verfestigungsmatrix ohne Gefährdung der Eigenschaften des Endproduktes zugesetzt werden kann.

## Revendications

1. Procédé de traitement et d'élimination d'une résine échangeuse d'ions usée en poudre, dans lequel ladite résine est d'abord mise en suspension dans l'eau, essentiellement pour permettre le transport, puis est déshydratée, séchée, soumise à un traitement thermique et mélangée à de l'eau et à des additifs liquides, le mélange obtenu est envoyé pour élimination dans un récipient (19), où on ajoute et on mélange un liant et des additifs solides, puis ledit mélange de liant, de résine séchée et ayant subi un traitement thermique, et d'eau, est abandonné pour lui permettre de se solidifier en donnant une masse dans laquelle la résine est contenue sous forme d'une charge,
caractérisé en ce que la résine est séchée et soumise à un traitement thermique à une température de 130 à 170°C pour décomposer les groupes fonctionnels de la partie anionique de ladite résine ; que les vapeurs qui s'échappent de la résine pendant le traitement, en particulier les vapeurs qui s'échappent pendant lesdites opérations de séchage et de traitement thermique, sont recueillies dans un circuit (17), de préférence un circuit à éjecteur ; que lesdites vapeurs, qui comprennent au moins de la vapeur d'eau et des composés organiques volatils tels que des amines, sont condensées pour donner un condensat, où la presque totalité desdits composés organiques volatils sont maintenus dissous dans ledit condensat ; que lesdits composés organiques volatils, contenus dissous dans le condensat, sont séparés du condensat, en donnant un condensat essentiellement exempt desdits composés organiques volatils, et une vapeur contenant lesdits composés organiques volatils ; et que lesdits composés organiques volatils sont soumis à une destruction, ce qui les transforme presque complètement en CO₂, H₂O et N₂ avant qu'ils se dégagent,

2. Procède selon la revendication 1, caractérisé en ce que le condensat qui a été débarrassé de la presque totalité des composés organiques volatils est ajouté à la résine, et le mélange est chargé dans un récipient (19) et, avec l'agent de solidification, un liant, de préférence un liant hydraulique tel qu'un ciment, on laisse se produire une solidification dudit mélange de résine, d'agent de solidification et de condensat.

3. Procédé selon la revendication 1 ou 2, caractérisé en ce que lesdits composés organiques volatils contenus dans les vapeurs qui se sont séparées du condensat sont oxydés par combustion et/ou par oxydation catalytique.

4. Procédé selon la revendication 3, caractérisé en ce que lesdites vapeurs oxydées sont envoyées dans un filtre absorbant (204) ou d'autres milieux absorbants, pour extraire les éventuels résidus organiques contenus dans lesdites vapeurs, avant dégagement de ces dernières.

5. Procédé selon l'une quelconque des revendications précédentes, caractérisé en ce que la solubilité desdits composés organiques volatils dans le condensat est abaissée pour séparer du condensat lesdits composés organiques volatils.

6. Procédé selon la revendication 5, caractérisé en ce qu'on ajoute un agent alcalin audit condensat pour élever le pH du condensat et réduire la solubilité desdits composés organiques dans le condensat, ce qui sépare dudit condensat lesdits composés organiques volatils.

7. Procédé selon l'une quelconque des revendications précédentes, caractérisé en ce que ladite résine, si elle se présente sous forme de perles, est, en tant que traitement préalable, soumise à un concassage, de préférence à un broyage, pour réduire la granulométrie de la résine et de ce fait améliorer les conditions du traitement thermique et simultanément augmenter la quantité de résine pouvant être ajoutée à la matrice de solidification sans mettre en danger les propriétés du produit final.

8. Installation pour le traitement et l'élimination d'une résine échangeuse d'ions usée, destinée à mettre en oeuvre le procédé selon l'une quelconque des revendications précédentes, qui comprend :
- un moyen (11, 13) pour mettre en suspension ladite résine et la transformer en une suspension pouvant être pompée, de préférence sous la forme d'une cuve,
- un moyen de déshydratation (15) de ladite résine, de préférence sous la forme d'une centrifugeuse,
- un moyen (16) pour sécher ladite résine, un sécheur,
- un moyen (18) pour mélanger ladite résine à un liant et à de l'eau, un mélangeur, et
- un moyen (19) pour envoyer ledit mélange dans un récipient dans lequel ledit mélange est abandonné pour se solidifier en donnant une masse dans laquelle la résine est contenue sous forme d'une charge,
caractérisée en ce que ladite installation comprend :
- un moyen, sous forme d'un circuit à éjecteur (17), comprenant au moins une pompe hydraulique (171) à éjecteur pour recueillir, condenser et refroidir les vapeurs qui s'échappent de ladite résine pendant le traitement, en particulier les vapeurs qui s'échappent de ladite résine pendant le séchage et le traitement thermique, lesdites vapeurs comprenant au moins de la vapeur d'eau et des composés organiques volatils tels que du méthane et des amines,
- un moyen (172) pour séparer lesdits composés organiques volatils du condensat, en donnant un condensat essentiellement débarrassé desdits composés organiques volatils, et une vapeur contenant lesdits composés organiques volatils,
- un moyen (202, 203) pour détruire lesdits composés organiques volatils, de façon à les transformer presque complètement en CO₂, H₂O et N₂ avant qu'ils se dégagent.

9. Installation selon la revendication 8, caractérisée en ce que ledit circuit à éjecteur (17) comprend
- un moyen d'aspiration (171), de préférence sous forme d'une pompe hydraulique à éjecteur, pour recueillir les vapeurs qui s'échappent de la résine pendant le traitement,
- un moyen de réfrigération, de préférence sous la forme d'eau circulant dans ledit circuit à éjecteur et d'un réfrigérant (173), pour condenser les vapeurs et refroidir le condensat, et
- une cuve de traitement (172), permettant de séparer dudit condensat lesdits composés organiques volatils.

10. Installation selon la revendication 8 ou 9, caractérisé par un moyen pour ajouter un agent alcalin (175) audit condensat, ce qui élève le pH dudit condensat de façon que la solubilité desdits composés organiques azotés volatils dans le condensat soit diminuée, et que lesdits composés organiques volatils et une partie du méthanol se séparent dudit condensat.

11. Installation selon l'une quelconque des revendications 8, 9 ou 10, caractérisée en ce qu'il est prévu un circuit de gaz (20) est pour permettre le traitement desdites vapeurs séparées du condensat, ledit circuit de gaz comprenant au moins un moyen pour détruire lesdits composés organiques volatils contenus dans lesdites vapeurs, par combustion et/ou oxydation catalytique (202, 203).

12. Installation selon la revendication 11, caractérisée en ce que ledit circuit de gaz (20) destiné au traitement desdites vapeurs comprend une unité de combustion (203) pour détruire lesdits composés organiques volatils, et, en aval de ladite unité de combustion, un filtre d'absorption (204) pour extraire desdites vapeurs tout résidu organique.

13. Installation selon les revendications 11 et 12, caractérisée en ce que ledit circuit de gaz (20) destiné au traitement desdites vapeurs peut comprendre un dispositif anti-retour de flamme (202) et/ou un échangeur de chaleur (201) en amont de l'unité de combustion, pour détruire lesdits composés organiques volatils, et, en aval de ladite unité de combustion, un réfrigérant (206) pour dissiper la chaleur avant un dégagement plus poussé de gaz.

14. Installation selon l'une quelconque des revendications 8 à 13, caractérisé par une unité de pré-traitement (204), de préférence sous forme d'un broyeur, disposée de façon à réduire la granulométrie de la résine échangeuse d'ions en perles et de ce fait améliorer les conditions du traitement thermique de ladite résine, et simultanément augmenter la quantité de résine pouvant être ajoutée à la matrice de solidification, sans mettre en danger les propriétés du produit final.
